# FASCICULE DE BREVET EUROPEEN

(11) **EP 0 343 705 B1**
(45) Date de publication et mention de la délivrance du brevet: **31.03.1993**
(21) Numéro de dépôt: 89201196.6
(22) Date de dépôt: 12.05.1989
(51) Int. Cl.: C08G 71/02, C08F 2/00

(54) **Utilisation de polythiourées pour éviter ou réduire le croûtage des réacteurs de polymérisation de PVC.**
Verwendung von Polythioharnstoffen zur Verhinderung oder Herabsetzung der Krustenbildung von Polymerisationsreaktoren für PVC.
Use of polythioureas to prevent or reduce the crustforming of PVC polymerisation reactors.

(30) Priorité: 24.05.1988 FR 8807058
(43) Date de publication de la demande: 29.11.1989
(73) Titulaire: SOLVAY (Société Anonyme), B-1050 Bruxelles (BE)
(72) Inventeur: Walraevens, René, B-1080 Bruxelles (BE); Coisne, Jean-Marc, B-1050 Bruxelles (BE); Strebelle, Michel, B-1150 Bruxelles (BE)
(74) Mandataire: Nichels, William

(56) Documents cités:
- BE-A- 544 868
- CH-A- 330 018
- DE-B- 1 042 892
- FR-A- 2 535 325
- PATENT ABSTRACTS OF JAPAN vol.3 no.75(c-50) JP-A-54 50089

## Description

La présente invention concerne l'utilisation de polythiourées pour éviter le croûtage de réacteurs de polymérisation.

Le brevet belge 544.868 divulgue des polythiourées de poids moléculaire élevé de formule 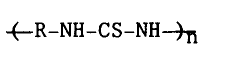
dans laquelle R représente un reste de formule -Ar- ou Ar-Z-Ar portant un groupe sulfonique, Ar représentant un reste arylène ou phénylène -(1,4) et Z les groupes -C≡C-, -CH=CH-, -CH₂-CH₂-, -NH-, -S-, -S-S-, et n est un nombre tel que la masse moléculaire du composé soit supérieure à 1000 et de préférence comprise entre 10³ et 10⁶. Ces produits ont des propriétés pharmacologiques, en particulier une action contre certains virus.

La présente invention vise à fournir une catégorie de polythiourées utilisables pour éviter ou réduire la formation de croûtes sur les parois internes des réacteurs de polymérisation du chlorure de vinyle.

Par polymérisation du chlorure de vinyle, on entend l'homopolymérisation du chlorure de vinyle ainsi que la copolymérisation d'un mélange de monomères à teneur prépondérante en chlorure de vinyle, tels que par exemple les mélanges de chlorure de vinyle et d'acétate de vinyle, respectivement de propylène ou d'éthylène.

Les polythiourées utilisables selon l'invention répondent à la formule générale : 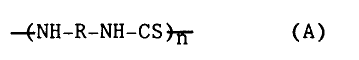
dans laquelle R représente un groupement aromatique substitué par au moins un groupement sulfonique et n représente un nombre entier compris entre 3 et 300.

Par groupement aromatique substitué par au moins un groupement sulfonique, on entend généralement les dérivés benzéniques éventuellement substitués par un ou plusieurs groupements alkyles, tels que le méthyle ou l'éthyle.

Par groupement sulfonique, on entend plus particulièrement les groupements de formule -SO₃H et les sels alcalins ou alcalino-terreux qui en dérivent, tels que notamment -SO₃Na et -SO₃K.

Les polythiourées selon l'invention peuvent se présenter sous forme d'isomères divers et notamment sous formes d'isomères de position.

Les polythiourées préférées selon l'invention répondent aux formules suivantes : 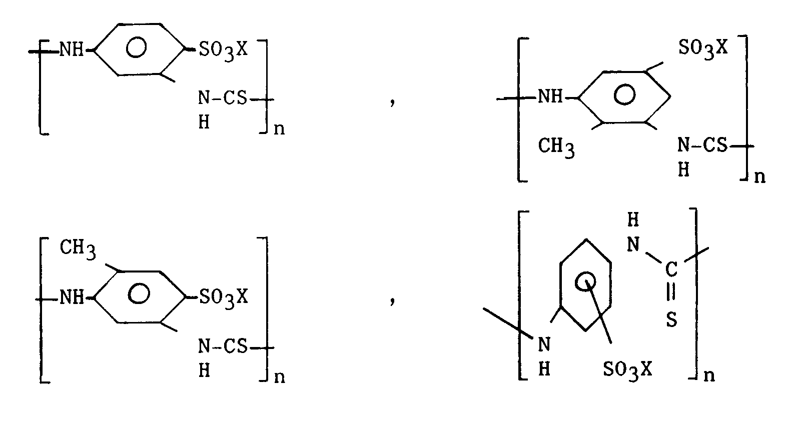
dans laquelle X représente un atome d'hydrogène ou un atome de sodium et n un nombre entier compris entre 5 et 200.

Les polythiourées particulièrement préférées possèdent une structure de formule : 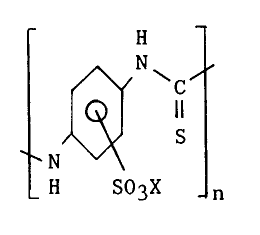
dans laquelle X représente un atome d'hydrogène ou un atome de sodium et n un nombre entier compris entre 5 et 100.

Les polythiourées tout particulièrement préférées selon l'invention répondent à la formule : 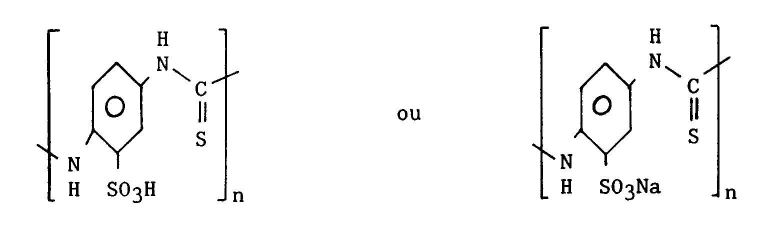
dans laquelle n représente un nombre entier compris entre 5 et 50 et, de préférence, entre 10 et 30.

Le nombre n, qui représente le degré de polymérisation, peut être déterminé par toute méthode physique ou chimique connue. Dans la présente demande, le nombre n a été déterminé par titrage des fonctions -NH₂ terminales des polythiourées concernées. La méthode de titrage utilisée consiste à titrer une solution de polythiourée à 5 % en poids dans une solution aqueuse avec une solution aqueuse de HClO₄ dont la concentration est de 2,5.10⁻² moles/litre au moyen d'un appareil potentiographe type E 536 de la société Metrohm.

Les polythiourées utilisables selon l'invention peuvent être préparées par toute synthèse organique appropriée regroupant des réactions connues et s'appliquant de façon générale ou de façon particulière à un seul composé ou à une famille de composes.

Un procédé intéressant pour la préparation des polythiourées selon l'invention consiste à faire réagir une diamine, de formule générale NH₂-R-NH₂ dans laquelle R représente les groupements cités précédemment pour la formule (A), et le thiophosgène CSCl₂.

La réaction peut s'effectuer éventuellement en présence d'un solvant, tel que le tétrachlorure de carbone.

La réaction peut également s'effectuer en présence d'un hydroxyde d'un métal alcalin ou alcalino-terreux, tel que l'hydroxyde de sodium ou de potassium et, dans ce cas, le procédé selon l'invention comprend les étapes suivantes :

### (1) réaction de la diamine et de l'hydroxyde de sodium :

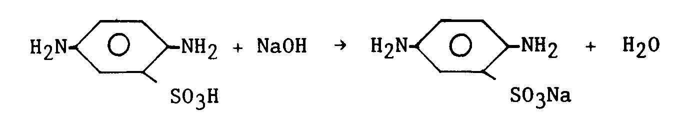

### (2) réaction du produit obtenu en (1) avec le thiophosgène :

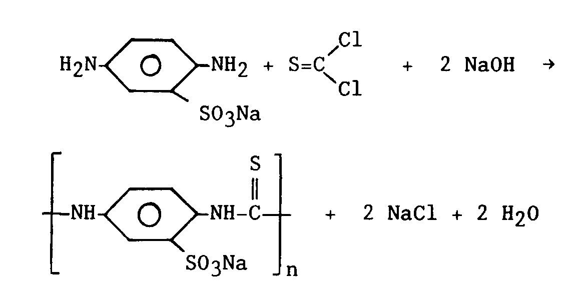

D'autres procédés consistent à transformer des polyurées, issues de la réaction d'une diamine et de phosgène, en polythiourées correspondantes ou à synthétiser les polythiourées par l'intermédiaire des diisothiocyanates ou des isothiocyanates.

Les polythiourées selon l'invention peuvent être mises en oeuvre dans toutes les techniques usuelles de polymérisation du chlorure de vinyle et notamment, dans la polymérisation en masse, en solution ou en dispersion aqueuse. De préférence, toutefois, elles sont mises en oeuvre dans les cas de polymérisation en suspension aqueuse et en émulsion aqueuse qui sont réalisées en présence des ingrédients usuels.

Toutes ces techniques de polymérisation donnent lieu à la formation sur les parois des réacteurs de polymérisation de croûtes constituées de sous-produits inutilisables. Ces croûtes sont constituées de dépôts solides de polymère et adhèrent fortement aux surfaces internes des réacteurs (cuves, agitateurs, déflecteurs, ...). On désigne généralement ce phénomène sous le nom de "croûtage". La présence des croûtes est hautement indésirable, elles contaminent le polymère fabriqué dans les cycles ultérieurs, elles réduisent la capacité de transfert de chaleur de la paroi du réacteur et elles diminuent la productivité. C'est pourquoi, il est indispensable de procéder après chaque cycle de polymérisation à un nettoyage approfondi des parois des réacteurs; ces nettoyages fréquents sont pénibles et coûteux. Par ailleurs, le croûtage qui évolue tout au long de la polymérisation perturbe de ce fait le bon déroulement de la polymérisation et rend plus difficile sa conduite.

Les polythiourées selon l'invention sont mises en oeuvre tout particulièrement pour la polymérisation en suspension aqueuse qui est la plus exigeante du point de vue de la propreté des parois du réacteur.

Pour éviter le croûtage des autoclaves de polymérisation, on peut soit revêtir les parois des réacteurs avec les polythiourées précitées, soit les incorporer dans le milieu de polymérisation.

Si on incorpore les polythiourées dans le milieu de polymérisation, la fréquence avec laquelle il faut effectuer ce traitement est fort variable et dépend notamment des conditions opératoires du traitement lui-même, des paramètres de la polymérisation, et de l'état de surface des parois.

Habituellement, les polythiourées sont mises en solution dans de l'eau et cette solution est pulvérisée sur les parois des réacteurs. Dans ce cas, la solution aqueuse de polythiourées contenant du chlorure de sodium, telle qu'obtenue par le procédé décrit ci-dessus, peut être mise en oeuvre directement; il n'est pas nécessaire d'isoler ou de purifier la polythiourée. Cette solution aqueuse peut être pulvérisée par de l'air comprimé à froid sur les parois des réacteurs de polymérisation. Une autre méthode consiste à enduire les parois des réacteurs avec les polythiourées selon toute technique connue avant de procéder à une nouvelle polymérisation dans les réacteurs.

Les quantités de polythiourées selon l'invention à mettre en oeuvre à la polymérisation du chlorure de vinyle peuvent varier dans une très large mesure, notamment en fonction de la nature des monomères et de l'état des surfaces internes des réacteurs utilisés. Lorsqu'on pulvérise la polythiourée, la quantité appliquée par unité de surface est habituellement comprise entre 200 et 1500 mg par m² et de préférence entre 700 et 1300 mg par m². Lorsqu'on introduit la polythiourée dans le milieu réactionnel, la quantité de polythiourée introduite est comprise habituellement entre 10 et 70 ppm par rapport au milieu réactionnel total ou 20 et 150 ppm par rapport au chlorure de vinyle dans ce cas particulier.

Les exemples suivants illustrent l'invention.

### Exemple 1

### A. Préparation de la polythiourée

Dans un ballon de 2 l, équipé d'une ampoule à addition munie d'un robinet, d'un thermomètre, d'un agitateur et d'une électrode de pH mètre, on introduit 0,4 moles d'acide 2,5-diaminobenzène sulfonique et 200 ml d'une solution aqueuse 2M d'hydroxyde de sodium.

Tout en mélangeant, on ajoute progressivement 0,4 mole de thiophosgène par l'intermédiaire de l'ampoule à addition. Le pH est maintenu à 8 par des additions régulières d'hydroxyde de sodium 5N.

La réaction est conduite à température ambiante et un refroidissement à l'eau est réalisé de manière à ne pas dépasser 30°C.

Après 45 minutes de réaction, on ajoute au mélange réactionnel de l'eau jusqu'à l'obtention d'un volume total de 2 l dont la teneur en polythiourée est de 5 %.

Le degré de polymérisation de la polythiourée obtenue est estimé à 19,8 d'après le titrage des fonctions -NH₂ terminales; l'échantillon porté à 100°C pendant 30 minutes ne présente plus qu'un degré de polymérisation de 12,4.

### B. Utilisation de la polythiourée comme agent anticroûtage

On utilise un réacteur de laboratoire en acier inoxydable de 3,5 litres de contenance, muni d'une double enveloppe, dans laquelle circule un fluide caloporteur et équipé d'un agitateur à pales conventionnel en acier inoxydable.

Les surfaces internes du réacteur sont nettoyées par un lavage au moyen de tétrahydrofuranne suivi d'une pyrolyse réalisée par chauffage de la paroi à 400°C pendant 30 minutes. Le réacteur est ensuite poli à l'aide d'alumine 5 µm, puis rincé abondamment à l'eau déminéralisée.

La solution aqueuse de polythiourée telle qu'obtenue sous le point 1A est appliquée sur les surfaces internes du réacteur par pulvérisation à l'air comprimé. La concentration mise en oeuvre est de 5,0 % en poids, le volume de solution utilisé est de 4,00 cm³, ce qui correspond à une quantité de matières actives mises en oeuvre de 1330 mg/m². La pulvérisation est suivie d'un égouttage de l'excès puis d'un séchage à l'air à température ambiante.

Le réacteur est refroidi à 15°C. On introduit successivement dans ce réacteur 1500 g d'eau déminéralisée, 0,726 g d'alcool polyvinylique. On met l'agitateur en marche (250 tr/min). Puis, on introduit 0,42 g de peroxydicarbonate de diéthyle. L'agitateur est arrêté.

On fait ensuite deux fois le vide dans le réacteur (à 133,3 mbar absolus) et entre les deux opérations, on balaie le réacteur à l'azote technique à la pression de 799,8 mbar absolus.

On introduit 1400 g de chlorure de vinyle sous une agitation de 500 tr/min.

On chauffe le milieu de polymérisation jusqu'à 58,5°C à la vitesse de 1°C par minute.

Après 45 min, on injecte 0,726 g d'alcool polyvinylique.

Après 3 heures, on introduit 300 g d'eau déminéralisée. On maintient le milieu de polymérisation à 58,5°C sous agitation jusqu'à ce que la pression tombe de 3,5 bars.

On refroidit jusqu'à température ambiante.

On arrête la polymérisation par détente de la pression dans le réacteur.

Ensuite, on réalise un entraînement du chlorure de vinyle monomère résiduaire à la vapeur d'eau.

On observe ensuite l'état des surfaces internes du réacteur : 0 à 10 % des surfaces internes du réacteur ont été recouvertes par une mince couche de croûte.

### Exemple 2R

On polymérise le chlorure de vinyle dans des conditions identiques à celles décrites à l'exemple 1, sauf qu'aucun agent anticroûtage n'est mis en oeuvre.

A l'inspection après polymérisation, on observe que les surfaces internes du réacteur sont recouvertes à 100 % de croûtage.

## Revendications

1. Utilisation de polythiourées pour éviter ou réduire le croûtage des parois internes des réacteurs de polymérisation du chlorure de vinyle, caractérisée en ce que les polythiourées répondent à la formule générale : 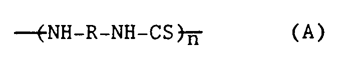 dans laquelle R représente un groupement aromatique substitué par au moins un groupement sulfonique et n représente un nombre entier compris entre 3 et 300.

2. Utilisation selon la revendication 1, caractérisée en ce que R représente un groupement benzénique éventuellement substitué par un ou plusieurs groupements alkyles, tels que le méthyle ou l'éthyle, et par un ou plusieurs groupements sulfoniques tels que -SO₃H, -SO₃Na ou -SO₃K.

3. Utilisation selon la revendication 1 ou 2, caractérisée en ce que les polythiourées répondent à la formule générale : 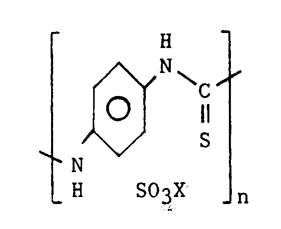 dans laquelle X représente un atome d'hydrogène ou un atome de sodium et n un nombre entier compris entre 5 et 100.

4. Utilisation selon la revendication 3, caractérisée en ce que les polythiourées répondent à la formule générale suivante : 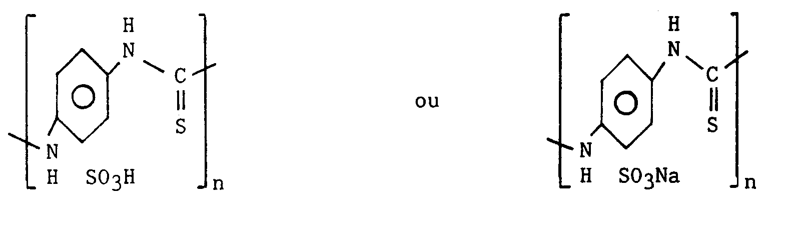 dans laquelle n représente un nombre entier compris entre 5 et 50.

5. Utilisation suivant l'une quelconque des revendications 1 à 4, caractérisée en ce que les polythiourées sont appliquées sur les parois internes des réacteurs de polymérisation.

6. Utilisation suivant la revendication 5, caractérisée en ce que la quantité de polythiourées appliquée est comprise entre 200 et 1500 mg par m² de paroi interne.

7. Utilisation suivant l'une quelconque des revendications 1 à 4, caractérisée en ce que les polythiourées sont introduites dans le milieu de polymérisation.

8. Utilisation suivant la revendication 7, caractérisée en ce que la quantité de polythiourées introduite est comprise entre 20 et 150 ppm par rapport au chlorure de vinyle.

## Claims

1. Use of polythioureas for preventing or reducing crust formation on the internal walls of vinyl chloride polymerisation reactors, characterised in that the polythioureas correspond to the general formula:
-(NH-R-NH-CS)ₙ- (A)
in which R denotes an aromatic group substituted by at least one sulphonic group and n denotes an integer between 3 and 300.

2. Use according to Claim 1, characterised in that R denotes a benzene group optionally substituted by one or more alkyl groups such as methyl or ethyl and by one or more sulphonic groups such as -SO₃H, -SO₃Na or -SO₃K.

3. Use according to Claim 1 or 2, characterised in that the polythioureas correspond to the general formula: 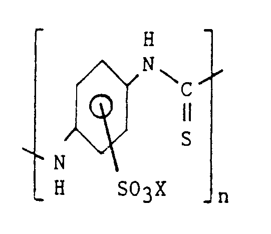 in which X denotes a hydrogen atom or a sodium atom and n an integer between 5 and 100.

4. Use according to Claim 3, characterised in that the polythioureas correspond to the following general formula: 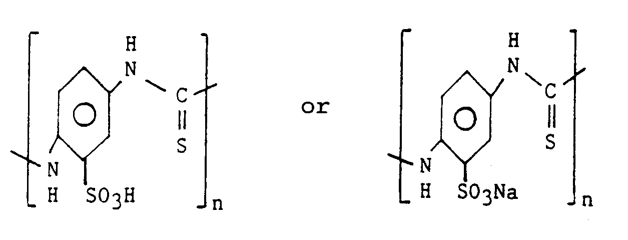 in which n denotes an integer between 5 and 50.

5. Use according to any one of Claims 1 to 4, characterised in that the polythioureas are applied to the internal walls of the polymerisation reactors.

6. Use according to Claim 5, characterised in that the quantity of polythioureas which is applied is between 200 and 1,500 mg per m² of internal wall.

7. Use according to any one of Claims 1 to 4, characterised in that the polythioureas are introduced into the polymerisation mixture.

8. Use according to Claim 7, characterised in that the quantity of polythioureas which is introduced is between 20 and 150 ppm relative to the vinyl chloride.

## Patentansprüche

1. Verwendung von Polythioharnstoffen zur Verhinderung oder Herabsetzung der Krustenbildung an den Innenwänden der Polymerisationsreaktoren für Vinylchlorid, dadurch gekennzeichnet, daß die Polythioharnstoffe der allgemeinen Formel:
-(-NH-R-NH-CS-)-ₙ (A)
entsprechen, in der R eine durch wenigstens eine Sulfongruppierung substituierte aromatische Gruppierung darstellt und n eine ganze Zahl zwischen 3 und 300 darstellt.

2. Verwendung nach Anspruch 1, dadurch gekennzeichnet, daß R eine Benzolgruppierung darstellt, die gegebenenfalls durch eine oder mehrere Alkylgruppierungen, wie Methyl oder Ethyl, und durch eine oder mehrere Sulfongruppierungen, wie -SO₃H, -SO₃Na oder-SO₃K substituiert ist.

3. Verwendung nach Anspruch 1 oder 2, dadurch gekennzeichnet, daß die Polythioharnstoffe der allgemeinen Formel: 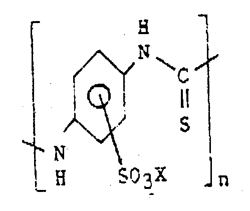 entsprechen, in der X ein Wasserstoffatom oder ein Natriumatom und n eine ganze Zahl zwischen 5 und 100 darstellt.

4. Verwendung nach Anspruch 3, dadurch gekennzeichnet, daß die Polythioharnstoffe der folgenden allgemeinen Formel: 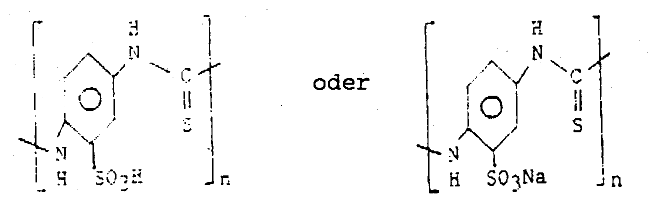 entsprechen, in der n eine ganze Zahl zwischen 5 und 50 darstellt.

5. Verwendung nach einem der Ansprüche 1 bis 4, dadurch gekennzeichnet, daß die Polythioharnstoffe auf den Innenwänden der Polymerisationsreaktoren aufgetragen werden.

6. Verwendung nach Anspruch 5, dadurch gekennzeichnet, daß die verwendete Polythioharnstoffmenge zwischen 200 und 1500 mg pro m² Innenwand beträgt.

7. Verwendung nach einem der Ansprüche 1 bis 4, dadurch gekennzeichnet, daß die Polythioharnstoffe in das Polymerisationsmedium eingeführt werden.

8. Verwendung nach Anspruch 7, dadurch gekennzeichnet, daß die eingeführte Menge an Polythioharnstoffen zwischen 20 und 150 ppm bezogen auf das Vinylchlorid beträgt.
